(19) Europäisches Patentamt

European Patent Office

Office européen des brevets

(11) **EP 1 014 054 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*G01H 1/00* *(2006.01)*     *G06F 17/40* *(2006.01)*

(21) Anmeldenummer: **99125687.6**

(22) Anmeldetag: **22.12.1999**

(54) **Verfahren zur modellbasierten schwingungsdiagnostischen Überwachung rotierender Maschinen**

Method for model-based diagnostic vibration monitoring of rotating machines

Procédé de contrôle des machines rotatives se basant sur un model diagnostique des vibrations

(84) Benannte Vertragsstaaten:
**AT BE CH CY DE DK ES FI FR GB GR IE IT LI LU MC NL PT SE**

(30) Priorität: **24.12.1998 DE 19860333**

(43) Veröffentlichungstag der Anmeldung:
**28.06.2000 Patentblatt 2000/26**

(73) Patentinhaber: **Brüel & Kjaer Vibro GmbH**
**64293 Darmstadt (DE)**

(72) Erfinder:
• **Zöller, Rolf, Dr.**
**64380 Rossdorf (DE)**
• **Reine, Frank, Dr.**
**60594 Frankfurt am Main (DE)**
• **Weigel, Manfred, Dr.**
**64846 Gross-Zimmern (DE)**

(74) Vertreter: **Behrens, Helmut**
**Gross-Gerauer Weg 55**
**64295 Darmstadt (DE)**

(56) Entgegenhaltungen:
**EP-A- 0 933 622**     **DE-A- 3 725 123**
**DE-C- 19 707 173**     **US-A- 5 408 863**
**US-A- 5 748 508**

## Beschreibung

Die Erfindung betrifft ein Verfahren zur modellbasierten schwingungsdiagnostischen Überwachung rotierender Maschinen.

Die Hauptaufgabe eines Verfahren zur schwingungsdiagnostischen Überwachung des Zustandes von rotierenden Maschinen besteht darin, möglichst ohne Betriebsunterbrechung eine Beurteilung des aktuellen Maschinenzustandes, der Belastung der Maschine und jeglicher Veränderungen des Maschinenzustandes zu ermögli= chen. Unter Maschinenzustand versteht man dabei die Bewertung des technischen Zustandes der Maschine auf der Basis der Gesamtheit der aktuellen Werte aller Schwingungsgrößen und Betriebsparameter. Schwingungsgrößen sind alle aus den Schwingungssignal=Zeitfunktionen ableitbaren Kenngrößen, bei= spielsweise Effektivwert der Schwinggeschwindigkeit oder Spitzenwert des drehfrequenten Schwingweganteiles. Betriebsparameter sind beispielsweise Drehzahl, Leistung, Erregerstrom, Temperaturen und Drücke.

Eine Beurteilung des Maschinenzustandes, bei der eine qualitative Aussage über den technischen Zustand der Maschine getroffen wird, erfolgt durch Analyse der gemessenen Schwingungs= größen unter Einbeziehung der Betriebsparameter.

Ein derartiges Verfahren ist aus der Druckschrift "VIBROCAM 5000, Das System zur diagnostischen Überwachung von Turboma= schinen, C081, der Carl Schenck AG" bekannt, das besonders für den Einsatz an Dampfturbosätzen, Gasturbinen, Turbopumpen, Turboverdichtern und Wasserkraftmaschinen geeignet ist.

Die Rotoren der genannten Maschinen bilden zusammen mit den Lagern und dem Fundament ein komplexes Feder-Masse-System. Das Schwingungsverhalten hängt stark vom Betriebsregime, von der Betriebsart, dem Betriebszustand und den Aufstellungsbedingungen der Maschine ab, so daß für jede einzelne Meßstelle jeder Maschine betriebsart-, betriebsregime- und betriebszustandsabhängige, individuelle Schwingungsgrößen ermittelt und zur Beurteilung herangezogen werden müssen.

Unter Betriebsart versteht man die prinzipiell zu unterscheidenden Modi der Maschine, wie z.B. Hochlauf, Normalbetrieb und Auslauf. Ein Betriebsregime unterscheidet innerhalb einer Betriebsart mögliche unterschiedliche Arbeitsweisen wie z. B. Turbinenbetrieb, Pumpenbetrieb und Phasenschieberbetrieb bei Pumpspeichersätzen in Wasserkraftwerken. Der Betriebszustand wird durch die Werte der signifikanten Betriebsparameter in den Betriebsregimen charakterisiert.

Veränderungen im Schwingungsverhalten können z.B. durch Abnutzungen und Schäden, Überlastungen und Verformungen, durch Störungen in der normalen Betriebsweise und durch Einflüsse aus dem elektrischen Netz verursacht werden. Die Ursachen von Schwingungen werden dabei im wesentlichen nach ihren Erscheinungsmerkmalen charakterisiert. Den höchsten Informationsgehalt haben dabei die Frequenzen der dominierenden Signalanteile im Schwingungsspektrum und die Frequenzen der Signalanteile, bei denen Änderungen auftreten.

Bei dem bekannten Verfahren schwingungsdiagnostischer Überwachung erfolgt zunächst eine Erfassung von Schwingungsgrößen und der Betriebsparameter beim jeweiligen Betriebsregime und Betriebszustand, sowie eine Frequenzanalyse und Bildung von Kenngrößen, die das Schwingungsverhalten und seine Änderung charakterisieren. Anschließend wird in einer Lernphase der Normalbereich und das Normalverhalten der selektiven Kenngrößen im Schwankungsbereich der Betriebsparameter für alle Betriebsregime und Betriebszustände ermittelt. In dem nachfolgenden Schritt erfolgt dann ein Grenzwertvergleich der aktuellen selektiven Kenngrößen mit den entsprechenden Kenngrößen des Normalzustandes, so daß gegebenenfalls Alarme ausgelöst bzw. sich anbahnende kritische Maschinenzustände rechtzeitig signalisiert werden können.

Aus der DE 37 25 123 ist weiterhin ein Verfahren zur schwingungsdiagnostischen Überwachung rotierender Maschinen, insbesondere thermischer Turbomaschinen bekannt. Bei diesem Verfahren werden als Schwingungsgrößen die zur Drehfrequenz harmonischen Signalanteile bei verschiedenen Zuständen erfaßt und in einem Zeigerspeicher abgelegt. Anschließend wird in einem Bezugswertspeicher das arithmetische Mittel für jeden Signalanteil abgelegt. In einem Überwachungsmodul wird dann der Differenzwert zwischen aktuellem Zustand und mittlerem Bezugszustand ermittelt, der dann mit dem Normalbereich verglichen wird. Zusätzlich können zum jeweiligen Meßpunkt die zugehörigen Betriebsparameter erfaßt werden. Mit Hilfe dieser Meßdaten wird dann in einem Regressator eine Funktion bereitgestellt, die den Bezugswert in Abhängigkeit von den Betriebsparametern vorausbestimmen kann.

Aus den oben beschriebenen. Verfahren, zur schwingungsdiagnostischen Überwachung rotierender Maschinen sind die Zusammenhänge zwischen Schwingungsverhalten der Maschine und den Betriebsparametern nur unzureichend ermittelbar. Weiterhin sind für die Schwingungsgrößen der unterschiedlichen Betriebsregime und Betriebszustände eine Vielzahl von Grenzwerten vorzugeben, was zu einer großen Datenmenge und einem erheblichen Arbeitsaufwand führt.

Aufgrund des bekannten Standes der Technik liegt der vorliegenden Erfindung die Aufgabe zugrunde, die Zusammenhänge zwischen Schwingungsverhalten der Maschine und Betriebsparametern bei Reduktion des Aufwandes exakter zu bestimmen, um die Überwachung und Beurteilung des Maschinenzustandes zu verbessern.

Diese Aufgabe wird durch die in Patentanspruch 1 angegebenen Merkmale gelöst.

Mit dem erfindungsgemäßen Verfahren zur modellbasierten schwingungsdiagnostischen Überwachung rotierender Maschinen wird es möglich, automatisch Abhängigkeiten der Schwingungen von Betriebsparametern zu ermitteln und anzuzeigen. Dies führt nicht nur zur erheblichen Reduktion der Datenmengen, die bei der bisherigen Überwachung gespeichert werden mußten, sondern gibt auch einen besseren Aufschluß über die Ursachen der Schwingungen. Veränderungen des Maschinenzustandes werden besser erkannt. Durch optimierte Einstellung der Betriebsparameter kann ein schwingungsärmerer Betrieb der Maschinen erreicht werden.

In einer Weiterentwicklung des Erfindungsgedankens ist vorgesehen, daß bei der Bewertung der relativen Abweichung der Schwingungsgrößen für alle Betriebsregime und Betriebszustände wenige oder ein einziger Kennwert vorgegeben wird. Hierdurch wird eine drastische Reduktion der sonst nötigen Anzahl von Grenzwerten für die Überwachung des Maschinenzustandes erreicht.

Die vorliegende Erfindung wird anhand der schwingungsdiagnostischen Überwachung eines Pumpspeichersatzes näher erläutert.

Es zeigen:

Fig. 1: eine schematische Darstellung des Wellenstrangs eines Pumpspeichersatzes mit den Meßstellen und der Datenverarbeitungseinheit;

Fig. 2: eine Darstellung der Lernphase in einem Blockschaltbild ;

Fig. 3: eine Darstellung der Betriebsphase in einem Blockschaltbild.

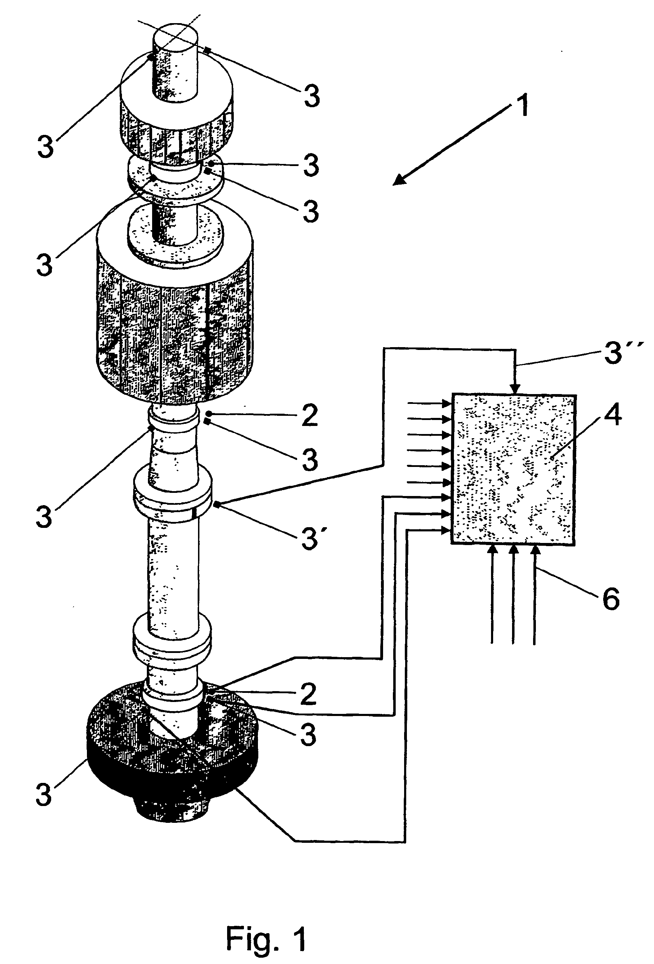

In Fig. 1 ist schematisch der Wellenstrang 1 eines Pumpspeichersatzes mit den Meßstellen zur Schwingungsmessung dargestellt. Den Lagerstellen und den Meßebenen für Wellenschwingungsmessungen sind jeweils Aufnehmer 2, 3 zur Erfassung von Schwingungssignalen zugeordnet. Die an den Meßstellen über die Aufnehmer 2, 3 ermittelten Schwingungssignale werden an eine Datenverarbeitungseinheit 4 weitergeleitet (dargestellt durch Pfeile 5). Gleichzeitig wird vom Wellenstrang 1 mittels Referenzaufnehmer 3' ein Referenzsignal 3" (ein Impuls pro Maschinenumdrehung) abgeleitet und der Datenverarbeitungseinheit 4 zugeführt. Zusätzlich sind eine Vielzahl von Aufnehmern vorgesehen, die die unterschiedlichen Betriebsparameter, wie beispielsweise Leistung, Erregerstrom, Drücke und Temperaturen, erfassen. Die Meßsignale für die Betriebsparameter werden ebenfalls an die Datenverarbeitungseinheit 4 weitergeleitet (dargestellt durch Pfeile 6). In der Datenverarbeitungseinheit 4 werden aus den Schwingungssignalen 5 und gegebenenfalls aus den Referenzsignalen 3" Schwingungsgrößen 5' ermittelt und abgespeichert oder zwischengespeichert. Gleichzeitig werden auch die Meßwerte für die Betriebsparameter 6' abgespeichert.

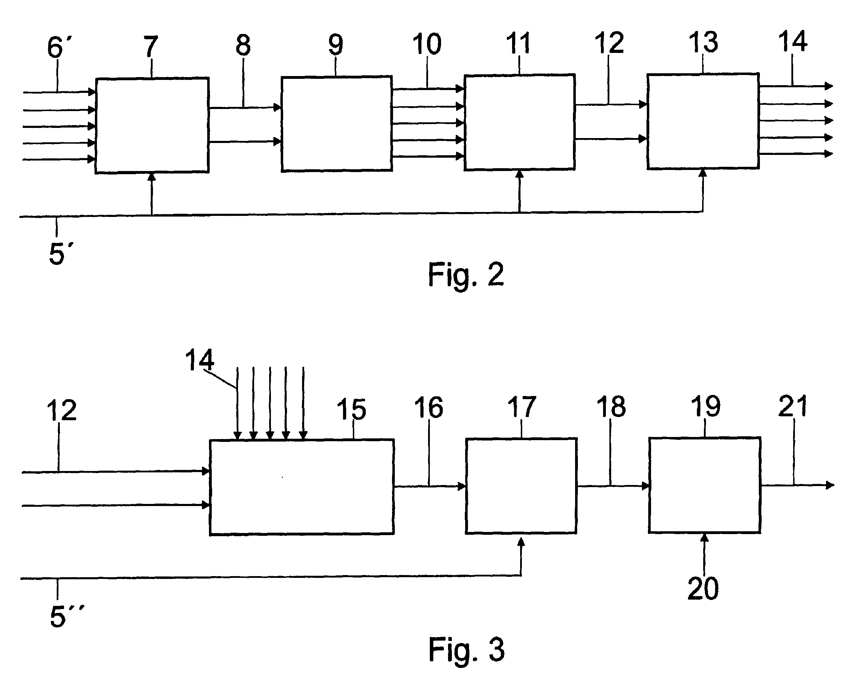

Grundlage des erfindungsgemäßen modellbasierten Verfahrens zur schwingungsdiagnostischen Überwachung bildet zunächst die Lernphase die in Fig. 2 schematisch dargestellt ist und in der eine Modellbildung in mehreren Schritten erfolgt.

Erstes Ziel der Modellbildung ist es festzustellen, ob alle Betriebsparameter meßtechnisch erfaßt sind, die das Schwingungsverhalten der Maschine entscheidend beeinflussen. Dies läßt sich durch Vorhersage der Schwingungsgrößen alleine aus den Betriebsparametern überprüfen. Ist es möglich, mit einer einfachen Abbildungsvorschrift aus den Parameterwerten hinreichend genau auf die Schwingungsgrößen zu schließen, so sind die gesuchten Informationen in den Daten repräsentiert. Dazu wird der Ansatz

$$\hat{y}_i = \hat{F}(x_i)$$

gemacht, wobei F die Modellfunktion bezeichnet. Ein möglicher Ansatz für F ist eine Linearkombination von i.a. nichtlinearen Basisfunktionen. Das Modell für einen Datenpunkt der Zielgröße $y_i = y (it_s)$ ($t_s$ : Abstastzeit) für einen beliebigen Zustandsvektor $x_i$ ist dann gegeben durch

$$\hat{y}_i = \sum_{j}^{M} a_j X_j(x_i)$$

wobei $X_j$ eine Basisfunktion des Modells darstellt.

In der Lernphase werden zunächst alle gemessenen und in der Datenverarbeitungseinheit gespeicherten Betriebsparameter 6' einer Vorwärtsauswahl-Einheit 7 übermittelt. Weiterhin werden die Schwingungsgrößen 5' übermittelt. Es wird zunächst von einem linearen Vorhersagemodell ausgegangen, das die zum Zustandsvektor $X(i) = (x_1(i), x_2(i), ...x_d(i))$ zusammengefaßten Betriebsparameter 6' durch Linearkombination von dessen Komponenten auf die

Schwingungsgrößen $y(i) = (y_1(i), y_2(i),...x_1(i))$; $i = 1,2,...N$ abbildet. Anschließend erfolgt mit dem Verfahren der Vorwärts-Auswahl, das unten detailliert beschrieben ist, eine Bewertung der schwingungsbestimmenden Betriebsparameter auf Relevanz.

Die Auswahl der schwingungsbestimmenden Betriebsparameter wird so zurückgeführt auf ein Modellstruktur-Bestimmungsproblem, denn die einzelnen Betriebsparameter können als Terme eines Modells aufgefaßt werden und mittels Termauswahlverfahren diejenigen Terme ausgewählt werden, die zu einem optimalen Modell führen. Nur die Betriebsparameter, die auf diese Weise als relevant für die Vorhersage der Schwingungsgrößen erkannt werden, werden als Eingangsgrößen 8 einem Polynomgenerator 9 zugeführt. In dem Polynomgenerator 9 wird ein komplexeres und damit leistungsfähigeres Modell ermittelt. Komplexe Modelle lassen sich durch Hinzufügen von Potenztermen und Produkttermen realisieren. Diese Modelle nennt man Palynomialmodelle. Die Auswahl der optimalen Modellterme aus einer vorgegebenen Obermenge ist wieder eine Form der Modellstrukturbestimmung und erfolgt durch Vorwärtsauswahl. In der darauffolgenden Vorwärtsauswahl-Einheit 11 wird die Struktur des Modells aus den Schwingungsgrößen 5' und der vom Polynomgenerator 9 zur Verfügung gestellten Basisfunktion 10 ermittelt. Anschließend erfolgt die Bestimmung der optimalen Parameter $a_j$ durch das Minimieren der quadratischen Modellfehlersumme:

$$\chi^2 = \frac{1}{N}\sum_{i=1}^{N}(y_i - \hat{y}_i)^2$$

in der darauffolgenden Least-Square Parameter Schätzungseinheit 13 anhand der zugeführten Schwingungsgrößen 5' und der ausgewählten Basisfunktion 12. Dies führt zu einem linearen Gleichungssystem, dessen Lösung die gesuchten Modellparameter 14 liefert.

Die Modellstruktur-Bestimmung erfolgt mit dem im folgenden beschriebenen Verfahren der Vorwärts-Auswahl, die in der Vorwärtsauswahl-Einheit 7 und 11 ausgeführt wird. Zu einer zunächst leeren Menge von Betriebsparametern wird schrittweise diejenige Größe hinzugenommen, die den quadratischen Fehler $\chi^2$ am meisten verringert. Dadurch ergibt sich eine Rangfolge, die angibt, welche Betriebsparameter die Schwingungsgrößen am stärksten beeinflussen. Je mehr Betriebsparameter berücksichtigt werden, desto kleiner wird dieser quadratische Fehler $\chi^2$. Er bezieht sich jedoch nur auf die Daten der Lernphase (Trainingsdaten) und läßt keine Aussage darüber zu, wie das Modell auf unbekannte Daten (Testdaten) reagiert. Alleine ist der quadratische Fehler $\chi^2$ damit zur Auswahl relevanter Terme ungeeignet.

Eine notwendige Aussage liefert die Abschätzung des sogenannten Vorhersagefehlers mit den Testdaten. Dieser gibt an, wie genau das trainierte Modell bei zukünftigen, unbekannten Daten vorhersagt. Falls ausreichende Datenmengen aus der Lernphase vorliegen, kann dies durch Aufteilung der Daten in eine Trainingsdatenmenge und Testdatenmenge erfolgen.

Eine weitere Möglichkeit besteht in der Anwendung einer sehr viel effizienteren Methode, die in der Statistik bekannt ist und mit "Cross-Validation" bezeichnet wird (B. Efron und R.J. Tibshirani "An Introduction to the Bootstrap", Chapman and Hall, 1993). Bei dieser Methode werden mehrere Aufteilungen in Trainings- und Testdatenmengen vorgenommen. Eine extreme Variante davon ist es, die N Datenpunkte in eine Trainingsdatenmenge der Größe N-1 und eine Testdatenmenge der Größe 1 aufzuteilen. Dieses Verfahren wird "Leave-One-Out(LOO)Cross-Validation" genannt. Das Auswahlkriterium $\sigma^2$ ergibt sich dann als Durchschnitt der quadratischen Fehler bei Vorhersage der ausgelassenen Testdatensätze.

Sei $F_i(x_i)$ die Vorhersage des i-ten Datensatzes, nachdem das Modell mit den anderen N-1 Datensätzen trainiert wurde, dann ergibt sich für den Testdatenfehler $\sigma^2$:

$$\sigma^2 = \frac{1}{N}\sum_{i=1}^{N}(y_i - \hat{F}(x_i))^2$$

Der Vorteil dieser Methode ist zum einen, daß keine Beeinflussung des Mittelwertes durch die Aufteilung in Trainings- und Testdatenmenge entsteht und zum anderen, daß die gesamte Trainings- und Testdatenmenge zum Training verwendet werden kann.

Im Gegensatz zum quadratischen Fehler $\chi^2$, der angibt wie gut die Modellvorhersage mit den Trainingsdaten übereinstimmt, erhält man mit $\sigma^2$ ein Maß für die übereinstimmung bei unbekannten Datensätzen. Die zuvor eingeführte Fehlerfunktion $\chi^2$ nimmt monoton mit Zunahme neuer Basisfunktionen ab und ist damit zur Auswahl relevanter Terme ungeeignet. Der LOO-Fehler $\sigma^2$ jedoch, nimmt mit Hinzunahme neuer Basisfunktionen zunächst ab und steigt ab einer kritischen Anzahl wieder an, da der Fehler zwischen den Datensätzen der Trainingsmenge zunimmt (Overfitting). Diese Eigenschaft wird zur Auswahl relevanter Terme genutzt.

Nachdem durch die Auswahl von geeigneten Betriebsparametern in der Vorwärtsauswahl-Einheit 7 eine Beschränkung auf einige wenige Größen 8 erfolgte, kann mit diesen in dem Polynomgenerator 9 eine erneute Modellbildung erfolgen, bei der ein nichtlineares und damit leistungsfähigeres Modell zum Einsatz kommt. Dieses Modell liefert dann die gewünschten funktionalen Zusammenhänge zwischen Schwingungsgrößen und Betriebsparametern.

Bei thermischen Turbomaschinen haben häufig die beiden Termen Wirkleistung ($P(t)$) und Erregerstrom ($I(t)$) die größte Relevanz.

Der allgemeine Ansatz eines Polynomialmodells der Ordnung 2 lautet:

$$\hat{s}(t)=a_0+a_1P(t)+a_2P(t)^2+a_3I(t)+a_4I(t)^2+a_5P(t)I(t)=\sum_{j=1}^{6} a_jX_j(P(t),I(t))$$

Die Auswahl der relevanten Terme innerhalb dieses Modells erfolgt wieder mittels des bereits beschriebenen Verfahrens der Vorwärtsauswahl in der Vorwärtsauswahl-Einheit 11 und liefert einen kompakten, formelmäßigen Zusammenhang (wird nachfolgend als optimiertes Modell 12 bezeichnet) zwischen Schwingungsgrößen und den Betriebsparametern:

$$\hat{s}(t)=a_0+a_1P(t)+a_1I(t)^2$$

Die Ermittlung der Werte für die Modellparameter $a_0$, $a_1$ $+a_2$ 14 erfolgt in der Least-Square Parameter Schätzungseinheit 13.

Ist die Modellfindung- und Bildung aus der Lernphase abgeschlosssen, beginnt die Betriebsphase des Verfahrens. Die Betriebsphase ist schematisch anhand von Fig. 3 dargestellt. In dieser werden lediglich die zuvor ausgewählten Betriebsparameter 8 an das in der Lernphase optimierte Modell 12 übergeben. In der Recheneinheit 15 erfolgt dann die Vorgersage der Schwingungsgrößen nach dem oben beschriebenen Modellansatz unter Berücksichtigung der optimalen Modellparameter 14, die ebenfalls der Recheneinheit 15 zugeführt werden. Die vorhergesagten Schwingungsgrößen 16 werden einer Vergleichseinheit 17 zugeführt. Weiterhin werden die aktuell gemessenen Schwingungsgrößen 5" der Vergleichseinheit 17 zugeführt.

Ein Vergleich der vorhergesagten Schwingungsgrößen 16 mit den tatsächlich gemessenen Schwingungsgrößen 5" liefert zu jedem Zeitpunkt ein Maß für die Übereinstimmung zwischen Maschine und Modell und ist damit relevant für die Diagnose. Dabei ist der Betrag der relativen Abweichung ein Maß für signifikante Veränderungen des Maschinenzustandes. Dieser Wert kann als Ausgangswert 18 der Vergleichseinheit 17 einer Grenzwertvergleichseinheit 19 zugeführt werden werden. In der Grenzwertvergleichseinheit erfolgt der Vergleich der selektiven Abweichung 18 mit den vorgegebenen Grenzwerten 20. Es kann sich dabei um einige wenige oder nur um einen einzigen relativen Grenzwert handeln. Überschreitet die relative Abweichung 18 die vorgegebenen Grenzwerte 20, erfolgt die Abgabe eines Signals 21. Dieses kann z. b. für eine Alarmmeldung oder eine Datenarchivierung genutzt werden.

Das zuvor beschriebene erfindungsgemäße Verfahren eignet sich nun in einer weiteren Ausgestaltung dazu, Zusammenhänge anzugeben, die in gleichartigen Betriebsphasen isoliert gelten. Beispiele sind Vollastphasen, Schwachlastphasen oder Fehlerzustände. Dies macht es notwendig, die Datenmenge in natürliche Klassen einzuteilen, was hier automatisiert erfolgen kann. Dazu werden die Betriebsparameter einem Fuzzy-C-Means Clustering unterzogen (M.P. Windham "Geometrical fuzzy clustering alogorithms", Fuzzy Sets and Systems, 10; 271-279, 1983). Dieses Verfahren führt zur Einteilung der Daten in n Klassen, wobei n je nach Anwendungsfall geeignet vorzugeben ist. Es erfolgt hiermit eine Segmentierung des Zeitbereichs in Segmente, in denen eine weitgehend stationäre Betriebsphase vorliegt. Die Modellierung erfolgt dann im weiteren innerhalb der Segmente und liefert die Zusammenhänge getrennt für jede Betriebsphase. Dies hat den Vorteil, Abhängigkeiten erkennen zu können, die lediglich in einer oder wenigen Betriebsphasen vorliegen, und Handlungsweisen speziell für diese Betriebsphasen (z.B. Vollastphase) ableiten zu können.

## Patentansprüche

1. Verfahren zur modellbasierten schwingungsdiagnostischen Überwachung rotierender Maschinen, bei dem in einer Lemphase zunächst Schwingunpgrößen und Betriebsparameter erfasst und gespeichert werden und anschließend eine Modellbildung in mehreren Schritten erfolgt, wobei zuerst anhand eines einfachen, beispielsweise linearen Modells die zum Zustandsvektor x(i) zusammengefassten Betriebsparameter durch Lincarkombination von dessen Komponenten auf die Schwingungsgrößen y(i) abgebildet werden und durch Vergleich der gemessenen und der vorhergesagten Schwingungsgrößen anhand des Modells zunächst überprüft wird, ob alle schwingungsrelevanten Größen erfasst sind, anschließend mittels des Verfahrens einer Vorwärtsauswahl eine Bewertung der Rangfolge der Betriebsparameter auf Relevanz erfolgt, dann mittels ausgewählten für eine Vorhersage der Schwingungsgrößen als relevant erkannten Betriebsparametern eine Modellbildung eines Polynomialmodells erfolgt und dann mit dem Verfahren der Vorwärtsauswahl eine erneute Bewertung der Rangfolge der Betriebsparameter auf Relevanz erfolgt, so dass auf Basis eines Polynomiahnodells ein optimiertes Modell gebildet wird, welches eine Abhängigkeit der Schwingungsgrößen von den relevanten Betriebsparametern darstellt, und in einer anschließenden Betriebsphase aktuelle Schwingungsgrößen und Betriebsparameter erfasst werden und durch Bewertung der relativen Abweichung der aktuell gemessenen Schwingungsgrößen von den vom Modell vorhergesagten Schwingungsgrößen signifikante Veränderungen des Maschinenzustandes feststellbar sind.

2. Verfahren zur schwingungsdiagnostischen Überwachung nach Patentanspruch 1, wobei bei dem Verfahren der Vorwärtsauswahl die Bestimmung der relevanten Betriebsparameter durch Minimieren der quadratischen Modellfehlersumme erfolgt.

3. Verfahren zur schwingungsdiagnostischen Überwachung nach Patentanspruch 1, wobei der Abbruch des Verfahrens der Vorwärtsauswahl für die Bestimmung der relevanten Betriebsparameter durch das Leave-One-Out - Cross-Validation - oder durch andere Cross-Validation-Verfahren erfolgt.

4. Verfahren zur schwingungsdiagnostischen Überwachung rotierender Maschinen nach Patentanspruch 1, wobei die signifikanten Veränderungen angezeigt und bewertet, für Alarmmeldungen, Datenspeicherungen und zur Abschaltung der Maschine genutzt werden

5. Verfahren zur schwingungsdiagnostischen Überwachung rotierender Maschinen nach Patentanspruch 4, wobei wenn nach einer Bewertung der signifikanten Veränderungen auf annormale oder unzulässige Maschinenzustände geschlossen werden kann, eine Veränderung der relevanten Betriebsparameter auf Basis der Kenntnis der funktionalen Zusammenhänge zwischen relevanter Betriebsparameter und vorhergesagter Schwingungsgrößen erfolgt.

6. Verfahren zur schwingungsdiagnostischen Überwachung rotierender Maschinen nach Patentanspruch 1, wobei bei der Bewertung der relativen Abweichung für alle Maschinenzustände wenige oder ein einziger Kennwert vorgegeben wird.

7. Verfahren zur schwingungsdiagnostischen Überwachung rotierender Maschinen nach Patentanspruch 1, wobei Daten in stationäre Segmente unterteilt werden.

8. Verfahren zur schwingungsdiagnostischen Überwachung rotierender Maschinen nach Patentanspruch 7, wobei die Unterteilung mit Fuzzy C-Means Clustering erfolgt.

9. Verfahren zur schwingungsdiagnostischen Überwachung rotierender Maschinen nach Patentanspruch 8. wobei für alle stationären Segmente jeweils eine Modellbildung erfolgt, so dass für alle stationären Segmente auf Basis eines Polynomialmodells ein optimiertes Modell gebildet wird, welches eine Abhängigkeit relevanter Betriebsparameter und Schwingungsgrößen darstellt.

## Claims

1. Method for model-based vibration diagnostic monitoring of rotating machinery, in which vibration quantities and operating parameters are first recorded and stored during a teaching phase, with subsequent modelling in several steps, wherein operating parameters, combined into the state vector x(i) on the basis of a simple, for example, linear model, are first mapped to the vibration quantities y(i) by linear combination of the components of the state vector, and a check is then performed by comparing the measured and predicted vibration quantities on the basis of the model, to ascertain whether all vibration-relevant quantities have been recorded, following which the ranking of operating parameters according to their relevance is established using the method of forward selection, and a polynomial model is determined on the basis of selected operating parameters recognised as relevant for the prediction of the vibration quantities, and a re-assessment of the operating parameters according to their relevance is then performed by means of the method of forward selection, to obtain an optimum model on the basis of a polynomial model, representing the relationship between the vibration quantities and the relevant operating parameters, and wherein actual vibration quantities and operating parameters are determined in a subsequent operation phase and significant changes can be detected by assessing the relevant deviation between the currently measured vibration quantities and the quantities predicted by the model.

2. Method for vibration diagnostic monitoring in accordance with Patent Claim 1, wherein the determination of the relevant operating parameters during the process of forward selection is achieved by minimization of the root mean square error sum of the model.

3. Method for vibration diagnostic monitoring in accordance with Patent Claim 1, wherein the abortion of the process of forward selection for the determination relevant operation parameters is achieved by means of Leave-One-Out Cross Validation or other Cross Validation methods.

4. Method for vibration diagnostic monitoring of rotating machinery in accordance with Patent Claim 1. wherein significant changes are displayed and assessed, and used for alarm messages, data storage and shut-down of the machine.

5. Method for vibration diagnostic monitoring of rotating machinery in accordance with Patent Claim 4, wherein a modification of the relevant operating parameters takes place on the basis of the knowledge of the functional interrelationships between the relevant operating parameters and the predicted vibration quantities, if the assessment of significant changes permits the conclusion that abnormal or illegal machine states may be present.

6. Method for vibration diagnostic monitoring of rotating machinery in accordance with Patent Claim 1, wherein few or only a single characteristic parameters are preset for all machine states during the assessment of the relative deviation.

7. Method for vibration diagnostic monitoring of rotating machinery in accordance with Patent Claim 1, wherein data is subdivided into steady-state segments

8. Method for vibration diagnostic monitoring of rotating machinery in accordance with Patent Claim 7, wherein the subdivision is achieved by means of Fuzzy C-Means Clustering.

9. Method for vibration diagnostic monitoring of rotating machinery in accordance with Patent Claim 8, wherein one each model is generated for each of the steady-state segments, so that an optimum model is obtained for all steady-state segments on the basis of a polynomial model, representing the relationship between relevant operating parameters and vibration quantities.

**Revendications**

1. Méthode de surveillance diagnostique de vibrations de machines en rotation, basée sur la modélisation, qui dans sa phase d'apprentissage, enregistre et sauvegarde d'abord les grandeurs vibratoires et les paramètres d'exploitation et les modélise ensuite par étapes, et les paramètres d'exploitation, combinés en un vecteur d'état x(i), sont enchaînés d'abord aux grandeurs vibratoires y(i) à l'aide d'un simple modèle, par exemple linéaire par la combinaison linéaire des composants du vecteur d'état, et vérifiés ensuite au moyen du modèle, grâce à la comparaison des grandeurs vibratoires mesurées avec les grandeurs prédites, pour établir si toutes les grandeurs vibratoires significatives ont été enregistrées, suit alors l'évaluation du classement hiérarchique relative à leur signification, effectuée grâce à la méthode de sélection séquentielle SFS et la formation subséquente d'un modèle polynomial effectuée sur la base des paramètres d'exploitation sélectionnés, qui ont été reconnus comme significatifs pour prédire les grandeurs vibratoires, puis suit une nouvelle estimation des paramètres d'exploitation, en fonction de leur signification, par la méthode de sélection séquentielle SFS pour obtenir un modèle optimum reposant sur le modèle polynomial, représentant la relation entre les grandeurs vibratoires et les paramètres d'exploitation significatifs, et déterminer ensuite les grandeurs vibratoires actuelles et les paramètres d'exploitation dans une phase d'exploitation subséquente, les changements importants pouvant être détectés par évaluation de la déviation significative entre les grandeurs vibratoires actuellement mesurées et les grandeurs prédites par le modèle.

2. Méthode de surveillance diagnostique de vibrations, conformément à la revendication du brevet 1, où la détermination des paramètres d'exploitation significatifs durant le processus de sélection séquentielle SFS est réalisée par minimisation du carré de la somme des erreurs du modèle.

3. Méthode de surveillance diagnostique de vibrations, conformément à la revendication du brevet 1, où l'interruption du procédé de sélection séquentielle SFS pour la détermination des paramètres d'exploitation significatifs est réalisée au moyen de la méthode de validation croisée leave-one-out ou d'autres méthodes de validation croisée.

4. Méthode de surveillance diagnostique de vibrations de machines en rotation conformément à la revendication du brevet 1, où les modifications significatives sont affichées et évaluées, et utilisées pour des messages d'avertissement, pour la sauvegarde des données et la mise hors circuit de la machine.

5. Méthode de surveillance diagnostique de vibrations de machines en rotation, conformément à la revendication de brevet 4, où une modification des paramètres d'exploitation significatifs se produit sur la base de la connaissance des cohérences fonctionnelles entre les paramètres d'exploitation significatifs et les grandeurs vibratoires prédites, si une estimation des changements significatifs permet de conclure à des états anormaux ou inadmissibles de machine.

6. Méthode de surveillance diagnostique de vibrations de machines en rotation, conformément à la revendication du brevet 1, où peu ou un seul paramètre caractéristique a été prédéfini pour tous les états de machine lors de l'estimation de la déviation relative relatif.

7. Méthode de surveillance diagnostique de vibrations de machines en rotation, conformément à la revendication du brevet 1, où les données sont classées par segments stationnaires.

8. Méthode de surveillance diagnostique de vibrations de machines en rotation, conformément à la revendication du brevet 7. où la classification s'effectue au moyen de clusters de C-moyennes floues.

9. Méthode de surveillance diagnostique de vibrations de machines en rotation, conformément à la revendication du brevet 8, à l'occasion de quoi un modèle est généré pour chacun des segments stationnaires, de sorte qu'un modèle optimum est obtenu pour tous les segments stationnaires sur la base d'un modèle polynomial, représentant la relation entre les paramètres d'exploitation et les grandeurs vibratoires.

Fig. 1

Fig. 2

Fig. 3